# EUROPÄISCHE PATENTANMELDUNG

(11) **EP 0 965 624 A2**
(43) Veröffentlichungstag der Anmeldung: **22.12.1999**
(21) Anmeldenummer: 99110750.9
(22) Anmeldetag: 04.06.1999
(51) Int. Cl.: C09J 7/02, B05B 15/04

(54) **Stripfähiges Schablonenband und seine Verwendung**

(30) Priorität: 18.06.1998 DE 19827199; 25.06.1998 DE 19828350
(71) Anmelder: Beiersdorf Aktiengesellschaft, 20245 Hamburg (DE)
(72) Erfinder: Zimmermann, Dieter, 21635 Jork (DE)

(57) **Zusammenfassung**

Selbstklebendes und wiederablösbares Schablonenband, insbesondere zum Abdecken beim Malen oder Lackieren, dadurch gekennzeichnet, daß es aus einem selbstklebenden Produkt besteht, das durch Ziehen in Richtung der Verklebungsebene wieder entfernbar ist.

## Beschreibung

Die bekannten Schablonenbänder (oder Stanzlinge) auf Papier- oder Folienbasis haben sich am Markt für glatte Untergründe bewährt, zeigen jedoch enorme Schwächen auf rauhen Oberflächen, z.B. gestrichene Rauhfaser. Hier kommt es sehr häufig zu Unterläufern bzw. wird beim Entfernen Farbe mit ausgerissen.

Somit war es Aufgabe der Erfindung, hier Abhilfe zu schaffen, also eine Problemlösung zur Verfügung zu stellen, die keine Unterläufer hinterläßt und sich ohne Beschädigung wieder entfernen läßt.

Gelöst wird diese Aufgabe durch ein Klebeband, wie es im Hauptanspruch und in bevorzugter Ausführungsform in den Unteransprüchen näher gekennzeichnet ist, sowie durch seine Verwendung.

Als Träger eignen sich Klebmassen, wie sie als 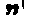 tesa Posterstrip®" im Handel sind und wie sie in DE 33 31 016 C2 beschrieben sind, aber auch solche gemäß US 5,516,581, EP 655,589 B1, WO 95/06691 A1, WO 97/07172 A1 und EP 761.793 A2.

Ein rückstandsfreies Ablösen des erfindungsgemäß verwendeten Schablonenbandes ist auf einfache Weise durch Ziehen desselbigen in Richtung der Klebebandlängsrichtung parallel zur Verklebungsfläche möglich. Die einfache Ablösung wird dabei durch die Dehnung des Klebebandes erreicht. Der auftretende Adhäsionsverlust wird durch Verringerung der Klebrigkeit der Haftklebemasse begünstigt sowie durch die Reduktion der Klebfoliendicke, verursacht durch die Dehnung der Klebstoff-Folie.

Dabei braucht das Ziehen nicht exakt ausgeführt zu werden, denn auch ein 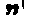 schräges" Ziehen führt zum Erfolg, wenn auch weniger elegant. Noch ist es erforderlich, genau in Richtung Verklebungsebene zu ziehen. Auch hier sind Abweichungen erlaubt, wobei dann allerdings Vorsicht geboten ist, um das Substrat nicht zu beschädigen.

### Geeignete Materielien

Träger sind Klebfolien, wie sie insbesondere in DE 33 31 016, DE 42 22 849 und WO 92/11333 beschrieben sind.

Besonders geeignet sind Klebfolien, wie sie als tesa Power Strip und insbesondere als tesa Poster Strip im Handel sind. Sie besitzen ein ausgewogenes Verhältnis zwischen Plastizität und Elastizität. Die Masse bleibt nach dem Andruck in den Vertiefungen haften und strippt sich nicht aufgrund zu hoher Elastizität vom rauhen Untergrund ab.

Beispielhaft wird Bezug genommen auf das Beispiel gemäß DE 33 31 016 C2, sowie auf folgende Rezeptur

| | Hersteller |
|---|---|
| 23,0 Cariflex TR 1101 (SB-Synthesekautschuk) | Shell |
| 23,5 Cariflex TR 1107 (SB-Synthesekautschuk) | Shell |
| 50,0 Pentalyn H (Kolophonium Harz) | Hercules |
| 0,5 Irganox 1010 (phenolisches Antioxidans) | Ciba |
| 0,5 Weston 399 (Antioxidans) | Ciba |
| 0,5 Chimasorb 944 (Absorber) | Ciba |
| 2,0 Kronat 2160 (Additiv) | Kronos |

Das Produkt kann im Doppelschneckenextruder gefertigt werden, zu näheren Einzelheiten wird auf das Beispiel aus DE 33 31 016 C2 verwiesen. Es wird auf Trennpapier extrudiert (0,3 - 0,6 mm) und zu Mutterrollen aufgeschnitten.

Auf die Masseseite der Mutterrolle wird Trennpapier einkaschiert, wobei gleichzeitig das Original Trennpapier dekaschiert wird. Sodann wird eine einseitig silikonisierte PE-Folie aufkaschiert. Danach wird rotativ gestanzt, das Gitter abgezogen, und das stripfähige Schablonenband ist fertig.

Dieses Schablonenband wird auf gestrichene Rauhfaser-Tapete geklebt, die PE-Folie abgezogen und mit wasserbasierter Farbe überstrichen. Nach dem Trocknen der Farbe wird das Schablonenband durch Ziehen in Richtung der Verklebungsebene entfernt. Das Ergebnis ist hervorragend: keine Unterläufer, kein Farbausriß und gestochen scharfe Farbkanten.

### Zwischenträger

Zur Adjustierung der Scherbelastbarkeit und der zur Lösung der Klebverbindung nötigen Kraft kann der Träger optional einen Zwischenträger enthalten. Geeignete Materialien umfassen u.a. Kunststoff-Folien, Vliese, Schäume, Filamente. Der Einsatz von geschäumten Zwischenträgern ermöglicht zusätzlich eine bessere Benetzung bei Verklebung oberflächenrauher Materialien.

Zum Arbeiten entfernt man das Trennpapier vom Band und klebt es z.B. auf gestrichene Rauhfaser. Malt man mit wäßriger Farbe, so kann die Releasefolie entfernt werden. Bei lösungsmittelhaltigen Farben verbleibt die Folie vorzugsweise auf der Masse.

## Patentansprüche

1. Selbstklebendes und wiederablösbares Schablonenband, insbesondere zum Abdecken beim Malen oder Lackieren, dadurch gekennzeichnet, daß es aus einem selbstklebenden Produkt besteht, das durch Ziehen in Richtung der Verklebungsebene wieder entfernbar ist.

2. Schablonenband nach Anspruch 1, dadurch gekennzeichnet, daß es mit oder ohne Zwischenträger elastisch oder plastisch dehnbar ist.

3. Schablonenband nach Anspruch 1, dadurch gekennzeichnet, daß sie aus einer Klebfolie besteht.

4. Schablonenband nach Anspruch 3, dadurch gekennzeichnet, daß die Adhäsion der Klebfolie geringer als die Kohäsion ist, das Haftvermögen beim Dehnen der Folie weitgehend verschwindet, und das Verhältnis von Abzugskraft zu Reißlast mindestens 1 :1,5 ist.

5. Schablonenband nach Anspruch 3, dadurch gekennzeichnet, daß die Klebfolie eine solche auf Basis von thermoplastischem Kautschuk und klebrigmachenden Harzen ist, mit hoher Elastizität und geringer Plastizität.

6. Schablonenband nach Anspruch 1, dadurch gekennzeichnet, daß es mit einem Trennpapier oder einer Trennfolie einseitig oder beidseitig abgedeckt ist.

7. Schablonenband nach Anspruch 1, dadurch gekennzeichnet, daß es gestanzt ist.

8. Schablonenband nach Anspruch 6, dadurch gekennzeichnet, daß es auch durch mindestens eines der Trennpapiere oder Trennfolien gestanzt ist.

9. Verwendung eines Schablonenbandes nach einem der Ansprüche 1 - 8 zum Abdecken insbesondere beim Malen oder Lackieren und danach zum beschädigungslosen und rückstandsfreien Entfernen durch Abstrippen.
